Europäisches Patentamt

European Patent Office

Office européen des brevets

Veröffentlichungsnummer: **0 295 421**

**A2**

# EUROPÄISCHE PATENTANMELDUNG

Anmeldenummer: **88107456.1**

Int. Cl.4: **C08K 5/15 , C08L 61/06 , C08J 9/14**

Anmeldetag: **10.05.88**

Priorität: **04.06.87 DE 3718724**

Veröffentlichungstag der Anmeldung:
**21.12.88 Patentblatt 88/51**

Benannte Vertragsstaaten:
**AT BE CH DE ES FR GB GR IT LI NL SE**

Anmelder: **Hüls Troisdorf Aktiengesellschaft**
**Postfach 11 65**
**D-5210 Troisdorf(DE)**

Erfinder: **Stark, Ernst Joachim, Dr.**
**Hermann-Ehlers-Strasse 28**
**D-5210 Troisdorf(DE)**
Erfinder: **Steeger, Hans**
**Kolpingstrasse 23**
**D-5210 Troisdorf(DE)**
Erfinder: **Berkenkopf, Gerd**
**Schellenberg 19**
**D-5216 Niederkassel(DE)**

Verfahren zur Herstellung von Phenolharz-Schaumstoffen mit verbessertem Wärmedämmvermögen.

Phenolharz-Schaumstoffe für die Verwendung als Isoliermittel aus wäßrigen Phenolresolen, Treibmitteln, Säuren als Härter und ggf. üblichen Additiven erhalten durch Zusatzstoffe aus der Gruppe der Mono- und Disaccharide, der Abbauprodukte, Hydrolysate und Hydrierungsprodukte von Polysacchariden, der Zuckeralkohole sowie der Ascorbinsäure eine wesentlich erhöhte Geschlossenzelligkeit und insbesondere eine erhöhte spezifische Wärmedämmung bzw. verminderte Wärmeleitfähigkeit λ. Voraussetzung ist die Verwendung von Harzen ausreichender Reaktivität sowie einer ausreichenden Menge von Härtern.

## Verfahren zur Herstellung von Phenolharz-Schaumstoffen mit verbessertem Wärmedämmvermögen

Die Erfindung betrifft ein Verfahren zur Herstellung technischer Phenolharzschäume mit insbesondere verbessertem Wärmedämmvermögen.

Schaumstoffe auf Basis vernetzter Phenolresolharze haben zahlreiche Anwendungen als Dämmstoffe im Bauwesen und Rohrleitungsbau. Bei Flammeinwirkung sind sie nicht schmelzend, nicht abtropfend, weiterhin halogenfrei und bilden praktisch keinen Rauch. Die Schäume bleiben bei Wärmeeinwirkung dimensionsstabil und alterungsstabil. Übliche technische Phenolharzschäume sind weitgehend offenporig und tauschen die im Schauminneren von der Herstellung her befindlichen flüchtigen Substanzen und Gase innerhalb weniger Tage aus. Übliche Treibmittel sind niedrig siedende Kohlenwasserstoffe, Chlorkohlenwasserstoffe oder Chlor-Fluorkohlenwasserstoffe. Zahlreiche Säuren sind als Härter geeignet. Es entstehen Phenolharzschäume mit Wärmeleitfähigkeiten λ im Bereich von 0,30 bis 0,35 W/mK bei Schaumdichten von 35 bis 70 kg/m³.

Eine wirksamere Wärmedämmung mit dem Ziel weiterer Energieeinsparung war somit mit den bekannten Phenolharzschäumen nicht erreichbar.

Es bestand daher die Aufgabe, Dämmstoffe auf Basis von Phenolharzschaum mit den typischen Vorteilen der Hitze-Flamm-Beständigkeit zu - schaffen, welche eine erhöhte spezifische Wärmedämmung, d.h. eine verminderte Wärmeleitfähigkeit λ bzw. einen verminderten Platzbedarf bei gleichem Wärmedämmvermögen haben.

Es wurde gefunden, daß wasserlösliche Zusatzstoffe der Gruppe der Mono- und Disaccharide, der löslichen Hydrolysate und Abbauprodukte von Polysacchariden, der hydrierten oder partiellhydrierten Polysaccharid-Abbauprodukte, der Zuckeralkohole und der Ascorbinsäure sowie weiterer löslichen Saccharid-Abbauprodukten zu erhöhter spezifischer Wärmedämmwirkung der Schaumstoffe und gleichzeitig zu einem erhöhten Volumenanteil geschlossener Zellen führen. Dabei sind Harze von bestimmter Reaktivität zu verwenden und erforderlichenfalls bestimmte Härter auszuwählen.

Gegenstand der Erfindung ist ein Verfahren zur Herstellung von Phenolharz-Schaumstoffen aus wäßrigen Phenolresolen oder deren Gemischen, Treibmitteln, Härtern und ggf. üblichen Additiven durch Härten und Verschäumen bei erhöhter Temperatur, dadurch gekennzeichnet, daß wasserlösliche Zusatzstoffe aus der Gruppe der Mono-und Disaccharide, der Polysaccharid-Abbauprodukte, der hydrierten oder teilhydrierten Polysaccharid-Abbauprodukte und der Zuckeralkohole, der wasserlöslichen Zuckerderivate oder der Ascorbinsäure dem Harzansatz zugegeben werden und im Reaktivitätstest die Mischung aus 100 Gew.-Teilen Harz und 12 ml einer Härterzubereitung, bestehend aus 50 Teilen Salzsäure der Dichte 1,190 (bei 20° C) und 50 Teilen Ethylenglykol der Dichte 1,109 (bei 20° C) eine maximale Temperatur im Bereich von 90 bis 150 °C aufweist. Der Reaktivitätstest wird mit reinem Harz, beispielsweise dem des Beispiels 1, ausgeführt.

Durch Verwendung der genannten Zusatzstoffe werden überraschend Schaumstoffe mit Wärmeleitfähigkeiten λ von höchstens 0,025, bevorzugt von höchstens 0,22 W/mK erhalten, wobei - offenbar im Zusammenhang damit - der Volumenanteil geschlossener Zellen auf über 80 %, vorzugsweise auf mindestens 85 % ansteigt. Wir haben um so bessere, d.h. niedrigere λ-Werte gefunden, je höher der bleibende Anteil geschlossener Zellen war. Hauptziel der Erfindung ist somit zunächst die Erreichung einer hohen Geschlossenzelligkeit. Das Herstellraumgewicht der Schaumstoffe liegt mit 35 bis 70 kg/m³ in demselben Bereich wie ohne Verwendung der erfindungsgemäßen Zusatzstoffe. Treibmittel sind aliphatische Kohlenwasserstoffe, chlorierte Kohlenwasserstoffe und zur Erreichung niedriger λ-Werte sehr bevorzugt chlorfluorierte Kohlenwasserstoffe.

Die Menge der Zusatzstoffe unterscheidet sich wesentlich in Abhängigkeit von der Art der Härter, wobei organische Säuren als Härter für vergleichbare Verminderung von λ erheblich größere Gew.-Teile der Zusatzstoffe benötigen als anorganische Säuren als Härter. Bei Verwendung organischer Säuren als Härter werden vorzugsweise 10 bis 45 Gew.-Teile der Zusatzstoffe, bei Verwendung anorganischer Säuren als Härter vorzugsweise 2 bis 10 Gew.-Teile der Zusatzstoffe je 100 Gew.-Teile Harz verwendet.

Die wasserlöslichen Zusatzstoffe können als wäßrige Lösung, als Lösungen anderer Lösungsmittel, als Suspensionen oder als feste Stoffe dem Harzansatz zugegeben werden.

Die Zusatzstoffe können dem Harz am Ende der Herstellung zugesetzt werden oder vorzugsweise dem fertigen Harz zu beliebiger Zeit vor der Härtung und Verschäumung zugefügt werden, wobei gleichmäßiger Verteilung von Wichtigkeit ist.

Die Harze sind Resole aus phenolischen Bestandteilen und carbonylischen Reaktionspartnern, wobei als Phenole das Phenol selbst, mehrwertige Phenole, kernalkylierte Phenole und mehrkernige Phenole in Frage kommen und als Carbonyl das Formaldehyd, formaldehydbildende Substanzen wie Paraformaldehyd, Trioxymethylen, Hexamethylentetramin, Acetaldehyd, Furfural etc. in bekannter Weise in Frage kommen. Die bekannten phenolischen carbonylischen Ausgangsstoffe werden in bekannter Weise zu Resolharzen umgesetzt, wobei Phenole und Aldehyde im molaren Verhältnis von vorzugsweise 1:1,2 bis 1:2,2 sehr bevorzugt 1:1,4 bis 1:1,7, eingesetzt werden. Formaldehyd wird zumeist als 30 bis 38 Gew.-%ige wäßrige Lösung verwendet. Kondensationskatalysatoren, besonders basische Substanzen in Form der Hydroxide der Alkali und Erdalkalien werden in Mengen von 0,3 bis 5 Gew.-%, bezogen auf eingesetzte Mol, verwendet. Im allgemeinen erfolgt eine Kondensation über 50 bis 80 Minuten bei Temperaturen bis 100° C, vorzugsweise durch Erhitzen im Rückfluß. Nach Abkühlung wird unter vermindertem Druck soweit Wasser abdestilliert, daß ein Festharzgehalt zwischen 65 und 80 Gew.-% und eine Viskosität von 1.500 bis 8.000 mPa.s (20° C), Hoeppler-Gerät) erreicht wird. Typische Kennzahlen geeigneter Resolharze sind Wassergehalte von 11 bis 15 Gew.-%, Gehalte an freien Aldehyden von 1 bis 10 Gew.-%, Gehalte an freiem Phenol von 5 bis 10 Gew.-%. Die Harzreaktivität als Maß für die Härtungs- und Vernetzungsgeschwindigkeit, werden durch Messung der max. Temperatur bei der exothermen Härtungsreaktion durch einen Normtest mit normierter Salzsäure als Härter, wie nachfolgend geschildert, bestimmt.

Bei der an sich bekannten Verschäumung werden flüssige, wasserhaltige Phenolresol-Harze mit einem als Treibmittel wirkenden verdampfbaren organischen Lösemittel, vorzugsweise einem chlorfluorierten Kohlenwasserstoff unter Rühren gemischt und nach Einmischen des sauer reagierenden Härtungskatalysators unverzüglich in der Formvorrichtung bei Temperaturen zwischen 50 und 80° C verarbeitet. Dabei erfolgt eine Volumenvergrößerung durch Aufschäumen und gleichzeitig oder danach die Härtung zu duroplastischem Schaum. Die Formgebung kann in einer Hohlform zu Blockschaum oder kontinuierlich auf horizontalen oder vertikalen Bandanlagen mit horizontaler oder vertikaler Begrenzung des Schäumraums erfolgen. Vorzugsweise wird die Außenfläche des Schaumkörpers durch Wärmezufuhr temperiert. Die Schäume können geschnitten werden. Die Schäume können Kaschierungen verschiedener Art, wie Aluminiumfolie, Papiere, Glasvliese oder glassichtige Folien tragen oder mit diesen nachträglich vesehen werden. Zur Erzielung einer gleichmäßigen Zellstruktur wird in beheizten Wärmekämmern oder geheizten Tunnelröhren gearbeitet.

Zweckmäßig werden den Harzen Tenside zur Stabilisierung der Emulsion aus Harz oder Treibmittel und zur Verbesserung der Porenstruktur des Schaums zugegeben, wobei nicht ionische Tenside, wie Addukte des Ethylenoxids und/oder Propylenoxids an gesättigte oder ungesättigte Fettsäuren, Hydroxyfettsäuren, Fettalkohole, Partialglyceride oder polyalkoxylierte Pflanzenöle in Menge von 0,5 bis 5 Gew.-% des Harzgewichts bevorzugt sind.

Als saure Härtungskatalysatoren sind anorganische Säuren oder organische Säuren in Mengen von 2 bis 25, vorzugsweise 3 bis 20 Gew.-Teile reine Säure je 100 Gew.-Teile Harz verwendbar.

Die Säuren werden z.B. als wäßrige oder alkoholische Lösung zugegeben, wobei ein- oder mehrwertige aliphatische Alkohole verwendbar sind. Übliche anorganische Säuren sind beispielsweise HCl, HBr, $H_2SO_4$, $H_3PO_4$, $H_3BO_3$ oder deren Mischungen. Geeignete organische Säuren sind beispielsweise p-Toluolsulfonsäure, Naphthalinsulfonsäuren, Xylolsulfonsäure, Me thansulfonsäure, Ethansulfonsäure, sulfonierte Novolake, Phenolsulfonsäure oder deren Mischungen.

Die Zusatzstoffe aus der Gruppe der Saccharide und der diesen nahestehenden Stoffe wirken offenbar über die lösliche Phase, wobei Wirkung weder an die Ringstruktur der Monosaccharide, Di- oder Polysaccharide noch an die Gruppe -CHOH- allein gebunden ist. Voraussetzung sind 5 oder mehr Kohlenstoffatome, mehrere OH-Gruppen und ggf. vorhandene Aldo- oder Ketogruppen. Monosaccharide wie die Aldopentose Xylose und die Ketohexose Fruktose sind wirksam, ebenso wie die Disaccharide, Maltose und Saccharose. Von besonderer Wirksamkeit sind die Zuruckalkohole wie Mannit und Sorbit. Die unter Säureeinwirkung oder enzymatisch hergestellten Hydrolysate von Polysacchariden, besonders der Stärke, beispielsweise die sogenannten Dextrine, sind sehr wirksam, ebenso wie die von Zuckern ableitbare Ascorbinsäure.

Höhere Zusatzmengen erfordern Xylose, eine Aldopentose und Fruktose, eine Ketohexose gegenüber Disacchariden wie Maltose oder Saccharose. Unwirksam sind Diole, Triole wie Glycerin oder Tetraole wie Pentaerythrit. Zuckerderivate mit Carboxylgruppen, z.B. Zuckersäuren und Zukkeralkohole mit verkappten OH-Gruppen sind nicht erfindungsgemäß.

Die Wirksamkeit sowie die wirksame Menge der zuckerartigen Zusatzstoffe kann bei Schäumversuchen anhand eines Ansteigens der Geschlossenzelligkeit des Schaums und der Herabsetzung des λ-Wertes festgestellt werden.

Bei diesen Test ist ein Harz der angegebenen Harzreaktivität von 90 bis 150° C unter den Testbedingungen zu verwenden. Substanzen, die unter den Testbedingungen zunächst einen hohen Anteil geschlossener Zellen ergeben, der schon nach kurzer Zeit oder unter Testbedingungen sich entscheidend vermindert, sind völlig ungeeigne. Ebenso sind Zusatzstoffe ungeeignet, die nach wenigen Wochen Lagerung einen entscheidend an-

steigenden $\lambda$-Wert z.B. auf oder über 0,025 bewirken.

Erfindungsgemäße Treibmittelzusätze sind 5 bis 35 g, vorzugsweise 8 bis 30 g je 100 g Harz. Um in den erfindungsgemäßen Schaumstoffen niedrige und stabil bleibende $\lambda$-Werte zu erhalten, sind Schaumdichten von 35 bis 70 kg/m$^3$ einzuhalten, bzw. wünschenswert.

Zur Erzielung niedriger $\lambda$-Werte werden Trichlorfluormethan und Trichlortrifluorethan oder deren Mischungen bevorzugt. Geeignete Treibmittel sind weiterhin Kohlenwasserstoffe wie Pentan, Butan oder Hexan und chlorierte Kohlenwasserstoffe wie Methylchlorid oder Tetrachlorkohlenwasserstoff.

Überraschenderweise werden somit durch die Zusatzstoffe die Wärmeleitfähigkeiten erheblich gesenkt und die mechanische Festigkeit und weitere Schaumeigenschaften verbessert, beispielsweise Wasseraufnahme vermindert und die Gas- und Feuchtedurchlässigkeit verringert.

Die um 30 bis 40 % mindestens um 10 bis 20 % gegenüber den Vergleichsproben ohne Zusatzstoffe erniedrigte Wärmeleitfähigkeit $\lambda$ hat sich als Stabil bei Lagerung bei Zimmertemperatur und auch unter schärferen Bedingungen bei 70°C erwiesen, wenn mindestens 80 %, vorzugsweise 85 % bis 96 % geschlossene Zellen festgestellt werden.

In den Beispielen wird vielfach mit Normharzen und mit normierten Mengen von Härter und Treibmittel gearbeitet, um die Vergleichbarkeit zu erreichen und die Wirkung nachzuweisen, jedoch ist die Herstellung der Schäume an diese Bedingungen durchaus nicht gebunden.

An den Schaumproben der Beispiele werden folgende Meßwerte bestimmt.

Der Volumentanteil geschlossener Zellen - % V - wird an einer zylindrischen Probe von 38,5 cm$^3$ mit 40 mm Längeund 35 mm Durchmesser in einem Luftvergleichspygnome ter Beckman, Modell 930, direkt nach der Herstellung ermittelt, wobei im Zweikammertext im Vergleich zu einer leeren Kammer (Geschlossenzelligkeit) gearbeitet wird, wobei der nach Volumenverminderung eintretende Druckanstieg verglichen wird. Das Raumgewicht des Schaumstoffs -G- wird in einer geschnittenen Probe von bekanntem Volumen durch Wiegen bestimmt.

Die Wärmeleitfähigkeit $\lambda$ wird nach Lagerung an einem aus dem Schaumkern gesägten Probekörper von 150 x 150 x 20 mm bei einer mittleren Temperatur der Probe von 24°C in W/mK bestimmt (Wärmeleitfähigkeits-Meßgerät Anazon Modell 88). Wenn nicht anders angegeben, wird $\lambda$ nach 28 Tagen Lagerung bei Raumtemperatur gemessen. Wird schon nach 7 oder 14 Tagen ($\lambda_7$ bzw. $\lambda_{14}$) ein zu hoher $\lambda$-Wert gemessen, wird das Produkt verworfen. $\lambda_7$ bzw. $\lambda_{14}$ liegt um 0,001 bis 0,003 unter dem Wert von $\lambda_{28}$.

Bei der Bestimmung der Harzreaktivität $T_{max}$ wird wie folgt verfahren:

100,0 g auf 20 ± 0,5°C temperiertes Harz werden in einem Einwegbecher, konisch, Höhe ca. 70 mm, Bodendurchmesser ca. 50 mm, oberer Durchmesser ca. 70 mm, eingewogen. Sodann werden 12,0 ml Prüfhärter (Gemisch aus 50 Vol-Teilen Ethylenglykol (rein), Dichte 1,10 g (20°C und 50 Vol-Teilen Salzsäure (rein) 37 Gew.-%ig, Dichte 1,19 (20°C) zugegeben und in ca. 45 s mit Glasstab eingemischt. Der Becher wird in ein mit Dämm-Material, z.B. Schaumstoff, ausgekleidetes Behältnis gegeben. Der Dämmstoff umschließt den Becher bündig. Ein Temperaturmeßfühler (Thermometer oder Thermoelement) wird senkrecht in die Mitte der Mischung eingetaucht. Der Meßpunkt befindet sich 10,0 mm oberhalb des Prüfbecherbodens. Die erreichte Maximaltemperatur wird abgelesen oder einem Temperaturschreiberdiagramm entnommen. Bei für das erfindungsgemäße Verfahren geeigneten Harzen liegen die so ermittelten $T_{max}$-Werte im Bereich von 90 bis 150°C.

### Beispiel 1 (Harz I)

1.000 Gew.-Teile Phenol, gelöst in 100 Gew.-Teilen Wasser, werden mit 1.290 Gew.-Teilen einer 37 Gew.-%igen wäßrigen Formaldehydlösung und 5,0 Gew.-Teilen Natriumhydroxid in 10,0 Gew.-Teilen Wasser versetzt. Das Gemisch wird auf 100°C erwärmt und bei dieser Temperatur unter Rühren und Rückflußkühlung 77 Minuten gehalten. Danach wird die entstandene Harzlösung im Vakuum (13 mbar, Sumpftemperatur 60°C) soweit entwässert, bis eine Harzprobe eine Viskosität von 2.500 mPa.s (20°C, Hoeppler-Gerät) bei 73 Gew.-% nichtflüchtiger Anteile, DIN 16 916-02 - H 1) aufweist. Die Reaktivität des Harzes liegt bei $T_{max}$ = 110°C.

### Beispiel 2

185,0 g Harz I werden unter Rühren mit 5,25 g Sorbit-Pulver, 5,6 g ethoxyliertem Ricinusöl und 33,0 g der Treibmittelmischung A,bestehend aus gleichen Teilen Trichlorfluormethan und Trichlortrifluorethan vermischt. Als letztes werden 15,0 g 65 Gew.-%ige Schwefelsäure eingemischt.

Das Reaktionsgemisch wird unverzüglich in eine mit Karton ausgekleidete, auf 60°C vorgewärmte stabile Holzform mit dem Innenmaß von ca. 160 x 160 x 160 mm eingegossen. Die Form wird in einen auf 60°C temperierten Wärmeschrank gegeben. Die obere Öffnung der Form wird mit einer lose aufliegenden Platte von 20 kg Gewicht abgedeckt. Nach einer Stunde ist der Schäum- und Härteprozeß beendet und der Schaumstoff kann entformt werden.

Der Schaum weist folgende Meßwerte auf: G = 49 kg/m³, % V = 96, λ = 0,018 W/mK.

## Beispiel 3

185,0 Harz I werden unter Rühren mit 76,0g pulverförmiger Saccharose, 5,6 g ethoxyliertem Ricinusöl, 50,0 g der Treibmittelmischung A (vgl. Beispiel 2) und als letztes 23,0 g 65 Gew.-%iger wäßriger 4-Toluolsulfonsäure vermischt. Die Mischung wird wie in Beispiel 2 zu einem Schaum mit folgenden Meßwerten verarbeitet: G = 57,5 kg/m³, % V = 92, λ = 0,020 W/mK.

## Beispiel 4

185,0 g Harz I werden unter intensivem Rühren mit 5,6g ethoxyliertem Ricinusöl, 28g der Treibmittelmischung A und als letztes mit 7,5 g Ascorbinsäure gelöst in 12,5 g 77 Gew.-%iger Schwefelsäure vermischt.

Das Reaktionsgemisch wird unverzüglich wie in Beispiel 2 zu einem gehärteten Schaumstoff verarbeitet. Meßwerte: G = 56,0 kg/m³, % V = 90 und λ = 0,019 W/mK.

## Beispiel 5

185,0 g Harz I werden unter intensivem Rühren nacheinander mit 6,7 g pulverförmigem Dextrin, 5,6 g ethoxyliertem Ricinusöl, 33,0g einer Treibmittelmischung A und als letztes 13,3g 64 Gew.-%iger Schwefelsäure vermischt und wie in Beispiel 2 zu Schaum verarbeitet. Meßwerte: G = 46 kg/m³, % V = 95, λ = 0,020 W/mK.

## Beispiel 6

185,0 Harz I werden unter intensivem Rühren mit 5,7 g gepulverter Saccharose, 5,6 g ethoxyliertem Ricinusöl, 30,0 g der Treibmittelmischung A und als letztes mit 20,0 g 50 Gew.-%iger Schwefelsäure vermischt und wie in Beispiel 2 zum fertigen Schaum verarbeitet. Meßwerte: G = 48 kg/m³, % V = 93, λ = 0,019 W/mK.

## Beispiel 7 (Gegenbeispiel)

185,0 g Harz I werden mit den in Beispiel 6 genannten Zusatzstoffen, jedoch mit Ausnahme der Saccharose, wie in Beispiel 6 genannt, vermischt. Die Mischung wird wie in Beispiel 2 beschrieben zum fertigen Schaum verarbeitet. G = 50 kg/m³. Der Volumenanteil geschlossener Zellen fällt während der Messung von 90 auf 76 ab. Die Wärmeleitfähigkeit $λ_{14}$ beträgt 0,031 W/mK. Mit 26,7 g 65 Gew.-%iger Phenolsulfonsäure anstelle der Schwefelsäure ergeben sich entsprechende Werte, insbesondere $λ_7$ von 0,031 W/mK.

## Beispiel 8 - Herstellung von Harz II

1.000 Gew.-Teile Phenol, gelöst in 100 Gew.-Teilen Wasser, werden mit 1.290 Gew.-Teilen 37 Gew.-%ige wäßrige Formaldehydlösung und 5,0 Gew.-Teilen Natriumhydroxid in 10,0 Gew.-Teilen Wasser versetzt. Das Gemisch wird auf 100° C erwärmt und bei dieser Temperatur unter Rühren und Rückflußkühlung 88 Minuten gehalten. Danach wird die Harzlösung im Vakuum (13 mbar, Sumpftemperatur 60° C) entwässert, bis eine Harzprobe eine Viskosität von 6.500 mPa.s (gemessen wir in Beispiel 1, bei 20° C, Hoeppler-Gerät) bei 74 Gew.-% Gehalt nichtflüchtiger Anteile, aufweist. $T_{max}$ = 93° C.

## Beispiel 9

230 g Harz II werden unter intensivem Rühren mit 9,4 g 70 Gew.-%iger wäßriger Sorbitlösung, 6,9 g ethoxyliertem Ricinusöl und 30,4 g der Treibmittelmischung A und zuletzt mit 15,6 g 77 Gew.-%iger Schwefelsäure vermischt und gemäß Beispiel 2 zu Schaum verarbeitet. G = 56, % V = 97, $λ_7$ = 0,016, $λ_{28}$ = 0,019 W/mK.

## Beispiel 10

185 g Harz II werden unter Rühren nacheinander mit 19,0 g Saccharose-Pulver, 5,6 g ethoxyliertem Ricinusöl, 33,0 g der Treibmittelmischung A und als letztes 23,0 g 65 Gew.-%iger Phenolsulfonsäure vermischt und wie in Beispeil 2 zu Schaum verarbeitet. G = 48, % V = 94, λ = 0,021 W/mK.

Beispiel 11 (Unterdosierung des Additivs/Gegenbeispiel)

Mit 185 g Harz I wird Beispiel 10 wiederholt, wobei aber 9,5 g Saccharose-Pulver zugegeben werden. G = 44, % V = 94, $\lambda$ = 0,027 W/mK.

Beispiel 12 (nicht erfindungsgemäßes Polyol/Gegenbeispiel)

185,0 g Harz I werden unter Rühren mit 5,25 g Glycerin, 5,6 g ethoxyliertem Ricinusöl und 33,0 g der Treibmittelmischung A und zuletzt mit 14,75 g einer 65 Gew.-%igen Schwefelsäure vermischt und wie in Beispiel 2 verschäumt. G = 47, % V = 89, $\lambda$ = 0,027 W/mK.

Beispiel 13

185,0 g Harzl werden unter Rühren mit 11,4 g Dextrose-Pulver, 5,6 g ethoxyliertem Ricinusöl, 33,0 g der Treibmittelmischung A und als letztes 20,0 g 50 Gew.-%iger Schwefelsäure vermischt und wie vorher verschäumt. G = 53, % V = 95, $\lambda$ = 0,020 W/mK.

Beispiel 14

185,0 g Harz II werden unter Rühren mit 10 g 70 Gew.-%iger Lösung von Xylit, 5,6 g ethoxyliertem Ricinusöl, 33,2 g der Treibmittelmischung A und als letztes mit 12,5 g 77 Gew.-%iger $H_2SO_4$ vermischt und wie vorher verschäumt.
G = 46, % V = 93, $\lambda$ = 0,020 W/mK.

Beispiel 15 - Herstellung von Harz III (Harz zu geringer Reaktivität)

1.000 Gew.-Teile Phenol, gelöst in 100 Gew.-Teilen Wasser, werden mit 1.290 Gew.-Teilen 37 Gew.-%iger wäßriger Formaldehydlösung und 8,0 Gew.-Teilen Natriumhydroxid in 10,0 Gew.-Teilen Wasser versetzt. Das Gemisch wird auf 100° C erwärmt und bei dieser Temperatur unter Rühren und Rückflußkühlung 98 Minuten gehalten. Danach wird die Harzlösung im Vakuum (13 mbar, Sumpftemperatur 60° C) soweit entwässert, bis eine Harzprobe eine Viskosität von 7.700 mPa.s bei 74 % Gehalt nichtflüchtiger Anteile (Meßmethoden wie Beispiel 1) aufweist. Reaktivität $T_{max}$ = 72° C.

Beispiel 16 (Gegenbeispiel - zu niedrige Harzreaktivität)

185,0 g Harz III werden unter Rühren mit 7,5 g 70 Gew.-%iger Sorbitlösung, 5,6 g ethoxyliertem Ricinusöl, 40,0 g der Treibmittelmischung A und zuletzt mit 12,5 77 Gew.-%iger Schwefelsäure vermischt und wie in Beispiel 2 verschäumt.
G = 45, % V = 94, jedoch $\lambda_7$ = 0,032 W/mK.

Beispiel 17

185,0 g Harz I werden unter Rühren mit 7,5 g Mannit-Pulver, 5,6 g ethoxyliertem Ricinusöl, 33,0 g Treibmittelmischung A uns als letztes mit 12,5 g 77 Gew.-%iger Schwefelsäure vermischt und wie in Beispiel 2 zu Schaum verarbeitet. G = 47, % V = 93, $\lambda$ = 0,021 W/mK.

Beispiel 18

185,0 g Harz I werden unter Rühren mit 7,5 g gepulverter Maltose, 5,6 g ethoxyliertem Ricinusöl, 33,0 g Treibmittelmischung A und zuletzt mit 12,5 g 77 Gew.-%iger Schwefelsäure vermischt und wie in Beispiel 2 verschäumt.
G = 47 kg/m$^3$, % V = 94 %, $\lambda$ = 0,018 W/mK.

**Ansprüche**

1. Verfahren zur Herstellung von Phenolharz-Schaumstoffen aus wäßrigen Phenolresol-Harzen oder deren Gemischen, Treibmitteln, Härtern und ggf. üblichen Additiven durch Härten und Verschäumen bei erhöhter Temperatur, **dadurch gekennzeichnet**, daß wasserlösliche Zusatzstoffe aus der Gruppe der Mono-und Disaccharide, der Hydrolysate und Abbauprodukte der Polysaccharide, der hydrierten oder teilhydrierten Polysaccharid-Abbauprodukte und der Zuckeralkohole, der wasserlöslichen Zuckerderivate oder der Ascorbinsäure dem Harzansatz zugegeben werden und im Reaktivitätstest die Mischung aus 100 Gew.-Teilen Harz ohne Zusatzstoffe und 12 ml einer Härtezubereitung, bestehend aus
50 Teilen Salzsäure der Dichte 1,190 (bei 20° C) und 50 Teilen Ethylenglykol der Dichte 1,109 (bei 20° C) eine maximale Temperatur im Bereich von 90 bis 150° C aufweist.

2. Verfahren gemäß Anspruch 1, dadurch gekennzeichnet, daß bei Verwendung von organischen Säuren als Härter die Zusatzstoffe in Mengen von 10 bis 40 Gew.-Teilen, bezogen auf 100 Gew.-Teile Harz, eingesetzt werden.

3. Verfahren gemäß Anspruch 1, dadurch gekennzeichnet, daß bei Verwendung von anorganischen Säuren als Härter die Zusatzstoffe in Mengen von 2 bis 10 Gew.-Teilen, bezogen auf 100 Gew.-Teile Harz, eingesetzt werden.